## Europäisches Patentamt
## European Patent Office
## Office européen des brevets

(19)

(11) Veröffentlichungsnummer: **0 054 960**
**B1**

(12) **EUROPÄISCHE PATENTSCHRIFT**

(45) Veröffentlichungstag der Patentschrift:
**26.08.87**

(51) Int. Cl.⁴: **A 23 G 3/04**

(21) Anmeldenummer: **81110676.4**

(22) Anmeldetag: **22.12.81**

(54) **Vorrichtung zur Durchführung eines Verfahrens zur Herstellung von Hartzuckermassen.**

(30) Priorität: **23.12.80 DE 3048904**

(43) Veröffentlichungstag der Anmeldung:
**30.06.82 Patentblatt 82/26**

(45) Bekanntmachung des Hinweises auf die Patenterteilung:
**26.08.87 Patentblatt 87/35**

(84) Benannte Vertragsstaaten:
**GB IT NL**

(56) Entgegenhaltungen:
**DE - C - 163 358**
**DE - C - 499 273**
**DE - C - 864 357**
**DE - C - 936 842**
**FR - A - 1 375 294**

(73) Patentinhaber: **Otto Hänsel GmbH, Lister Damm 19, D-3000 Hannover (DE)**

(72) Erfinder: **Hänsel, Otto, Richard-Wagner-Strasse 8, D-3000 Hannover (DE)**
Erfinder: **Markwardt, Klaus, Im langen Feld 6, D-3014 Laatzen 1 (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 054 960 B1

## Beschreibung

Die Erfindung betrifft eine Vorrichtung zur Durchführung eines Verfahrens zur Herstellung von Hartzuckermassen aus einer Zucker-Wasser-Glukose-Lösung, mit einem kontinuierlich arbeitenden Kocher für die Lösung, und daran angeschlossenen Vor- und Nachverdampfungskammern, die beide an einen Vakuumerzeuger angeschlossen sind, zur portionsweisen Befreiung der Lösung vom Wasser.

Üblicherweise werden Hartzuckermassen aus einer Zucker-Wasser-Glukose-Lösung hergestellt, die nach dem Kochen verdampft und unter Vakuumeinwirkung vom Wasser befreit wird, worauf die gewonnene Zuckermasse der weiteren Aufbereitung, beispielsweise in einem Mischer o.dgl. zugeführt wird, in welchem die Vermischung mit Zusatzstoffen wie z.B. Aromastoffen, Farbstoffen, Säuren o.dgl. erfolgt. Für die Durchführung dieses Verfahrens werden Einrichtungen verwendet, wie sie beispielsweise in der DE-PS 1 283 662, der DE-AS 1 923 637 und der DE-AS 2 512 423 beschrieben sind, und die im wesentlichen aus einem kontinuierlich arbeitenden Zuckerkocher mit einer diesem nachgeschalteten, an eine Vakuumpumpe angeschlossenen Ausdampfkammer sowie einer Misch- und Austragvorrichtung für die weiterzuverarbeitende Zuckermasse bestehen.

Die DE-C-936 842 beschreibt bereits das kontinuierliche Kochen der Zuckermasse in einer Heizschlange und ihre anschliessende diskontinuierliche Vakuumbehandlung sowie ihre Entnahme durch einen Körper in den Weiterbearbeitungskessel. Dabei ist zwischen der Vakuumkammer und dem Behandlungskessel eine weitere Kammer vorgesehen.

Gemäss der FR-A-1 375 294 wird die Zuckermasse kontinuierlich gekocht, vakuum-behandelt und ausgetragen. Hinter der Vakuumkammer ist hier eine Abzugskammer vorgesehen.

Die DE-C-163 358 erlaubt durch die in Kaskaden angeordneten Vakuumkammern einen ununterbrochenen Betrieb der Anlage.

In solchen Herstellungseinrichtungen wird kontinuierlich gekocht und kontinuierlich vakuumiert. Dabei bereitet das Austragen der Masse aus dem Vakuum erhebliche Schwierigkeiten, d.h. es ist ein erheblicher Aufwand von mechanischer Energie erforderlich.

Aufgabe der Erfindung ist es, diesen Mangel zu beheben und eine Einrichtung zu schaffen, die es gestattet, die Hartzucker-Masse ohne mechanische Arbeit aus dem Vakuum auszutragen und dabei den kontinuierlich ablaufenden Kochvorgang mit dem kontinuierlichen Mischprozess in einem geschlossenen Mischsystem zu verbinden. Dies wird erfindungsgemäss dadurch erreicht, dass die Nachverdampfungskammer über einen verschliessbaren Durchlass mit einer darunter angeordneten Vorratskammer verbindbar ist, welche über einen regelbaren Auslass in eine Austragskammer mit kontinuierlich arbeitender Förderschnecke und nachgeschaltetem, der Weiterverarbeitung dienendem Mischer einmündet.

Zwecks schnellerer Entleerung kann an die zusätzliche Vakuumierkammer ein Drucklufteinlass angeschlossen sein.

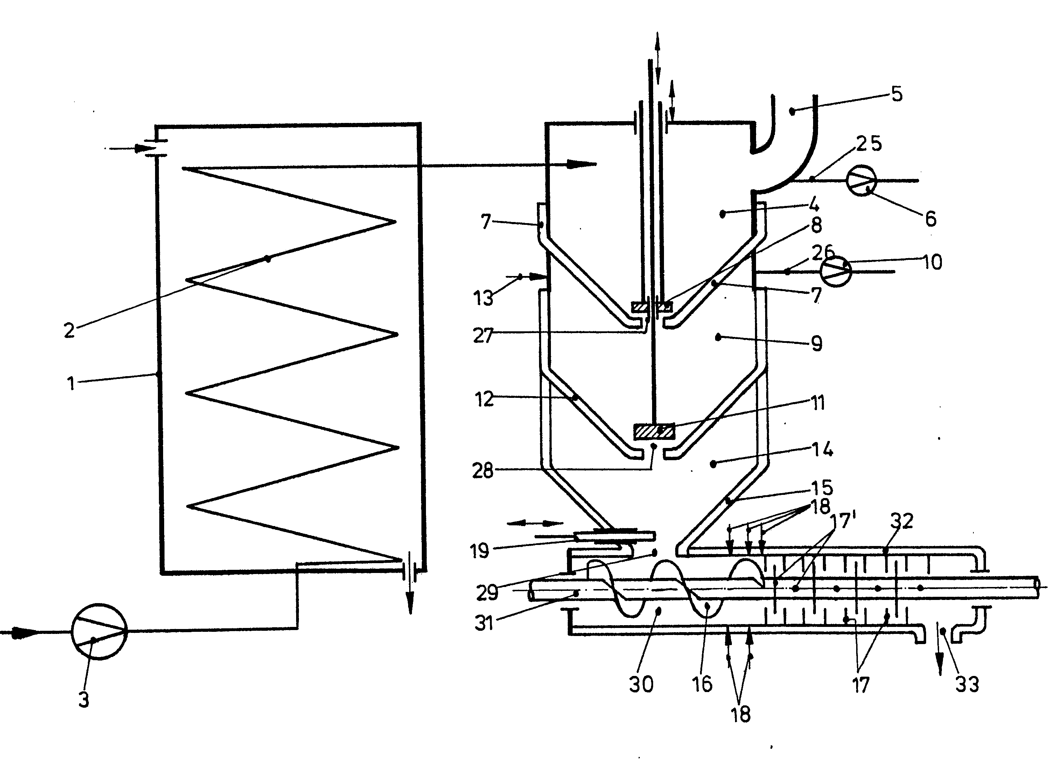

Mit besonderem Vorteil sind die einzelnen Kammern übereinander angeordnet, wobei in den Trennwänden von aussen steuerbare Durchlassventile vorgesehen sind. Ein Ausführungsbeispiel der Erfindung ist in der beigefügten Zeichnung schematisch wiedergegeben.

Bei der erfindungsgemässen Anlage ist eine zylindrische mit einem Dampfeintritt versehene Dampfkammer 1 vorgesehen, in welcher eine Kochschlange 2 untergebracht ist, durch die die zu bearbeitende Zucker-Wasser-Glukose-Lösung vermittels einer Pumpe 3 hindurchgefördert und dabei gekocht wird. Üblicherweise weist die zu bearbeitende Lösung 80% Trockensubstanz auf bei einer Temperatur von etwa 110 Grad C, wobei sie im Dampfraum bis auf etwa 140 Grad C erhitzt wird. Die gekochte Zuckerlösung wird anschliessend in die neben dem Dampfraum 1 angeordnete sogenannte Ausdampfkammer 4 geleitet. In dieser wird der aus der gekochten Lösung austretende Wasserdampf vom Zucker separiert und über den Brüdenabzug 5 abgeführt.

An die Ausdampfkammer 4 bzw. den Brüdenabzug 5 ist über die Leitung 25 eine Vakuumpumpe 6 angeschlossen, die es erlaubt, die Ausdampfkammer 4 als Vakuumkammer zu nutzen. Die Wandungen und der Boden der Ausdampfkammer 4 sind Doppelwände 7, deren Hohlräume an eine Dampfheizung anzuschliessen sind, die ein gleichzeitiges Aufheizen der Kammer gestattet.

Unmittelbar unter der Ausdampfkammer 4 ist eine Nachverdampfungskammer 9 vorgesehen, die über eine Leitung 26 an eine Vakuumpumpe 10 angeschlossen ist. Mit dieser lässt sich der in der Nachverdampfungskammer 9 herrschende Unterdruck verstärken, um auf diese Weise den Ausdampfvorgang zu fördern.

Die beiden Kammern 4 und 9 stehen über eine Durchtrittsöffnung 27 miteinander in Verbindung, die vermittels eines von aussen zu betätigenden Durchlassventils 8 zu verschliessen oder für den Massedurchtritt freizugeben ist. Ebenso ist auch im Boden der Nachverdampfungskammer 9 eine Auslassöffnung 28 vorgesehen, die mittels eines weiteren von aussen zu betätigenden Ventils 11 abzuschliessen ist. Der Massedurchsatz kann auch durch Druckluft unterstützt werden, welche über einen Drucklufteinlass 13 in die Kammer 9 eingeblasen werden kann. Ähnlich wie bei der Ausdampfkammer 4 sind auch die Wandungen und der Boden der Nachverdampfungskammer 9 durch Doppelwände 12 gebildet, die wieder an eine Heizanlage angeschlossen sind.

Schliesslich ist unter der Nachverdampfungskammer 9 eine Vorratskammer 14 vorgesehen, mit beheizbaren Doppelwänden 15 und einem zentralen offenen Auslass 29. Über diesen steht die Vorratskammer 14 mit der sogenannten Austragskammer 30 in offener Verbindung, in welcher eine, auf der Antriebsachse 31 sitzende Förderschnecke 16 angeordnet ist. Der Durchlass 29 zur Austragskammer 30 ist vermittels eines Schiebers 19 einstellbar. Der Antrieb der Welle 31 für das Förder- und Mischwerk ist mit einem nicht weiter dargestellten Drehzahlregler veränderbar. Die Austragskammer 30 geht in eine Mischkammer 32 über, die von der Achse 31 durchsetzt wird. In dieser erfolgt zwischen Mischorganen 17 und Mischflügeln 17' eine intensive Vermischung der Zuckermasse mit Zusatzstoffen, wie z.B. Aromastoffen, Farbstoffen, Säuren o.dgl., über Einlässe 18, die im einzelnen nicht dargestellt sind, zugeführt werden. Durch den Austritt 33 wird die Mischkammer entleert.

Beim Betrieb der Anlage wird die z.B. bis auf 140 Grad C gekochte Zuckerlösung in die Ausdampfkammer 4 geleitet. In dieser werden Wasserdampf und Zucker voneinander separiert, wobei der Wasserdampf über den Brüdenabzug 5 abgeführt wird. Vermittels der Vakuumpumpe 6 kann die Ausdampfkammer 4 als Vakuumierkammer genutzt werden. Die Wandungen der einzelnen Kammern werden in geeigneter Weise dampfbeheizt.

Bei geöffnetem Durchgangsventil 8 gelangt der Zucker in die Nachverdampfungskammer 9, an die ebenfalls eine Vakuumpumpe angeschlossen ist, so dass durch den dabei herrschenden Unterdruck (bis etwa 0,95 bar) die Masse erneut vakuumiert wird. Das Austrittsventil 11 in der Kammer 9 ist dabei geschlossen. Nach dem Ansammeln einer vorher bestimmten Zuckermenge (Satzgrösse) in der Nachverdampfungskammer 9 wird das Ventil 8 geschlossen und die Verbindung zur Vakuumpumpe 10 unterbrochen. Schliesslich wird die Nachverdampfungskammer 9 durch öffnen des Ventils 13 und des Auslassventils 11 belüftet, so dass die Zuckermasse unter der Einwirkung der Schwerkraft oder gegebenenfalls mit Unterstützung von durch das Ventil 13 zugeführter Druckluft in die Vorratskammer 14 des Mischsystems übertreten kann.

Aus der Vorratskammer 14 wird die Zuckermasse kontinuierlich gleichbleibend vom Förderteil 16 des Mischers 30, 32 abgezogen und zwischen die Mischorgane 17, 17' gebracht. Dabei werden über die Anschlüsse 18 Zusatzstoffe wie Aromastoffe, Farbstoffe, Säuren o.dgl. in flüssiger oder kristalliner Form zugeführt und im Mischer gleichmässig in der Masse verteilt. Eine Mengenregulierung und die Intensität der Bearbeitung können mittels des Ventilschiebers 19 oder eines Drehzahlreglers für die Mischkammer den gewünschten Verhältnissen angepasst werden.

Ist die Nachverdampfungskammer 9 entleert, so kann das Ventil 11 geschlossen und in der Nachverdampfungskammer 9 durch Anschliessen der Vakuumpumpe 10 ein neues Vakuum aufgebaut werden. Anschliessend wird das Ventil 8 geöffnet, so dass der sich in der Ausdampfkammer 4 aufgestaute Zucker in die Nachverdampfungskammer 9 gezogen werden kann, bis in dieser wiederum die vorbestimmte Satzgrösse erreicht ist.

**Patentansprüche**

1. Vorrichtung zur Durchführung eines Verfahrens zur Herstellung von Hartzuckermassen aus einer Zucker-Wasser-Glukose-Lösung, mit einem kontinuierlich arbeitenden Kocher für die Lösung und daran angeschlossen Vor- und Nachverdampfungskammern, die beide an einen Vakuumerzeuger angeschlossen sind, zur portionsweisen Befreiung der Lösung vom Wasser, dadurch gekennzeichnet, dass die Nachverdampfungskammer (9) über einen verschliessbaren Durchlass (11, 28) mit einer darunter angeordneten Vorratskammer (14) verbindbar ist, welche über einen regelbaren Auslass (29) in eine Austragskammer (30) mit kontinuierlich arbeitender Förderschnecke (16) und nachgeschaltetem, der Weiterverarbeitung dienendem Mischer (17, 32) einmündet.

2. Vorrichtung nach Anspruch 1, dadurch gekennzeichnet, dass die einzelnen Kammern (4, 9, 14) übereinander angeordnet und in den Trennwänden (7, 12, 15) von aussen steuerbare Durchlassventile (8, 11, 19) vorgesehen sind.

3. Vorrichtung nach Anspruch 1 und 2, dadurch gekennzeichnet, dass die Nachverdampfungskammer (9) mit einem Drucklufteinlass (13) ausgestattet ist.

**Claims**

1. Device, for the performance of a method for the production of hard sugar masses from a solution of sugar, water and glucose, with a continuously operating boiler for the solution and preliminary and finishing evaporator chambers which are connected thereto and both to an underpressure generator for freeing the solution of water portion by portion, characterised thereby, that the finishing evaporator chamber (9) is connectible by way of a closable passage (11, 28) with a reservoir chamber (14), which is arranged thereunder and opens by way of a regulable outlet (29) into an output chamber (30) with continuously operating conveyor worm (16) and downstream mixer (17, 32) serving the further processing.

2. Device according to claim 1, characterised thereby, that the individual chambers (4, 9, 14) are arranged one above the other and passage valves (8, 11, 19), which are controllable from outside, are provided in the partition walls (7, 12, 15).

3. Device according to claim 1 and 2, characterised thereby, that the finishing evaporator chamber (9) is equipped with a compressed air inlet (13).

**Revendications**

1. Dispositif de fabrication de masse de sucre dur à partir d'une solution de sucre, eau et glucose, comportant un récipient de cuisson travaillant en continu pour la solution et des chambres de pré et postvaporisation qui y sont raccordées, les deux chambres étant réunies à une installation de vide en vue de l'élimination partielle de l'eau de la solution, caractérisé par le fait que la chambre de postvaporisation (9) peut être mise en communication à travers un passage (11, 28) qui peut être fermé, avec une chambre de réserve (14) disposée en dessous, qui débouche par une sortie réglable (29) dans une chambre d'évacuation (30) munie d'une vis sans fin de transport (16), travaillant en continu et un mélangeur branché derrière qui sert à la mise en œuvre ultérieure.

2. Dispositif selon la revendication 1, caractérisé par le fait que les chambres individuelles (4, 9, 14) sont disposées les unes au dessus des autres et que des soupapes de passage (8, 11, 19) commandées de l'extérieur sont prévues dans les cloisons de séparation (7, 12, 15).

3. Dispositif selon l'une des revendications 1 ou 2, caractérisé par le fait que la chambre de postvaporisation (9) est équipée d'une arrivée (13) d'air comprimé.

0 054 960